# EUROPEAN PATENT APPLICATION

(11) **EP 3 696 415 A1**
(43) Date of publication of application: **19.08.2020**
(21) Application number: 20156898.7
(22) Date of filing: 12.02.2020
(51) Int. Cl.: F04C 15/00, F04C 28/26, F04C 29/00, F04D 25/16, F04D 29/70

(54) **AIR COMPRESSION DEVICE AND DUST PREVENTION METHOD FOR MOTOR**

(30) Priority: 12.02.2019 JP 2019023060
(71) Applicant: Nabtesco Corporation, Tokyo 102-0093 (JP)
(72) Inventor: KUROMITSU, Masaru, Chiyoda-ku, Tokyo 102-0093 (JP); TANAKA, Genpei, Chiyoda-ku, Tokyo 102-0093 (JP); KAWABATA, Keita, Chiyoda-ku, Tokyo 102-0093 (JP); KUGA, Takashi, Chiyoda-ku, Tokyo 102-0093 (JP)
(74) Representative: Grünecker Patent- und Rechtsanwälte PartG mbB

(57) **Abstract**

An air compression device (100) includes a compressor (10) that generates compressed air, a motor (12) that drives the compressor, and an air introduction unit (26) that introduces compressed air into the motor to increase an internal pressure.

## Description

The present invention relates to an air compression device for generating compressed air and a dust prevention method for a motor.

An air compression device is known which is installed in a railway vehicle and generates compressed air used in the railway vehicle. For example, JP 2011-226585 A describes an air compression device which includes a compressor driving part and a compressor and in which the compressor driving part and the compressor are connected via a coupling. In this air compression device, a compressor, a compressor driving part, a coupling case, a cooling fan, and an aftercooler that cools compressed air compressed by the compressor are housed in a housing case. In addition, the air compression device has a mechanism for supplying oil to the compressor and a mechanism for recovering the oil from the compressed air compressed with the oil.

The inventors of the present invention have studied the air compression device and obtained the following recognition.

The railway vehicle is equipped with the air compression device. Since the railway vehicle may travel in areas where there is a lot of dust such as sand dust, it is necessary to consider that the air compression device for railway vehicles is not adversely affected by dust. In this device, a motor is used to drive the compressor. The motor includes a rotor and a stator that are opposed via a gap. When dust enters this gap, the rotation of the motor can be hindered to cause malfunction or failure.

The measures to seal the casing of the motor can be considered. However, in this case, parts such as a seal are added, which is disadvantageous in terms of cost and manufacturing. The measures to reduce the gap between the rotating body and the case can be considered. However, processing and assembly become difficult, and productivity and cost competitiveness are reduced. Such a problem may occur not only in the air compression device for railway vehicles but also in other types of air compression devices.

From these, the present inventor has recognized that the air compression device described in JP 2011-226585 A has room for improvement from the viewpoint of reducing the intrusion of dust into the motor.

The present invention has been made in view of these problems, and an object of the present invention is to provide an air compression device which can reduce an invasion of dust to a motor.

In order to solve the above-described problems, an air compression device according to one aspect of the present invention includes: a compressor that generates compressed air; a motor that drives the compressor; and an air introduction unit that introduce the compressed air into the motor and increase an internal pressure.

According to this aspect, the inner pressure of the motor can be increased.

In addition, the above arbitrary combinations or ones obtained by mutually replacing the constituent elements and expressions of the present invention between a method, a device, a program, a temporary or non-temporary storage medium recording the program, a system, and the like are effective as an embodiment of the present invention.

According to this invention, the air compression device can be provided which can reduce the invasion of dust to the motor.
Fig. 1 is a system diagram schematically illustrating a configuration of an air compression device according to an embodiment of the present invention;
Fig. 2 is a schematic view illustrating a state where the air compression device of Fig. 1 is installed in a railway vehicle;
Fig. 3 is a front view schematically illustrating a compressor and a blower fan of the air compression device of Fig. 1;
Fig. 4 is another front view schematically illustrating the compressor and the blower fan of the air compression device of Fig. 1;
Fig. 5 is a view schematically illustrating a flow of air from the blower fan of the air compression device of Fig. 1 ;
Fig. 6 is a side sectional view schematically illustrating a periphery of a compressor driving part and a multiblade fan of the air compression device of Fig. 1;
Fig. 7 is an enlarged side sectional view illustrating a periphery of a labyrinth portion of the compressor driving part of Fig. 6;
Fig. 8 is a front view illustrating a periphery of a balance weight of the compressor driving part of Fig. 6;
Fig. 9 is a rear view illustrating the periphery of the balance weight of the compressor driving part in Fig. 6;
Fig. 10 is a perspective view schematically illustrating a cooler of the air compression device of Fig. 1 ;
Fig. 11 is a schematic view for explaining the flow of air in the cooler of Fig. 10; and
Fig. 12 is a front view schematically illustrating a periphery of a compressor of an air compression device according to a first modification.

Hereinafter, a preferred embodiment of the invention will be described with reference to the accompanying drawings. In an embodiment and it's modification, the same or equivalent components and members are denoted by the same reference numerals, and repeated description is appropriately omitted. In addition, the dimensions of the members in each drawing are appropriately enlarged or reduced for easy understanding. In addition, in the drawings, some of the members that are not important for describing the embodiment are omitted.

In addition, terms including ordinal numbers such as first and second are used to describe various components. However, this term is used only for the purpose of distinguishing one component from other components, and the components are not limited by the term.

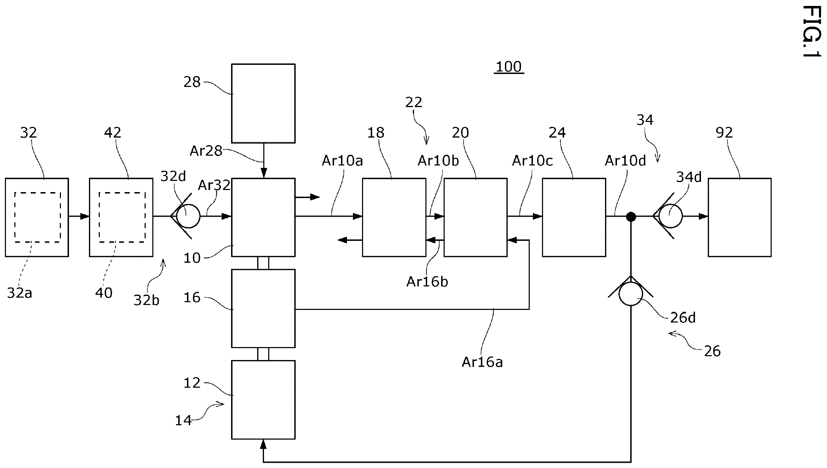

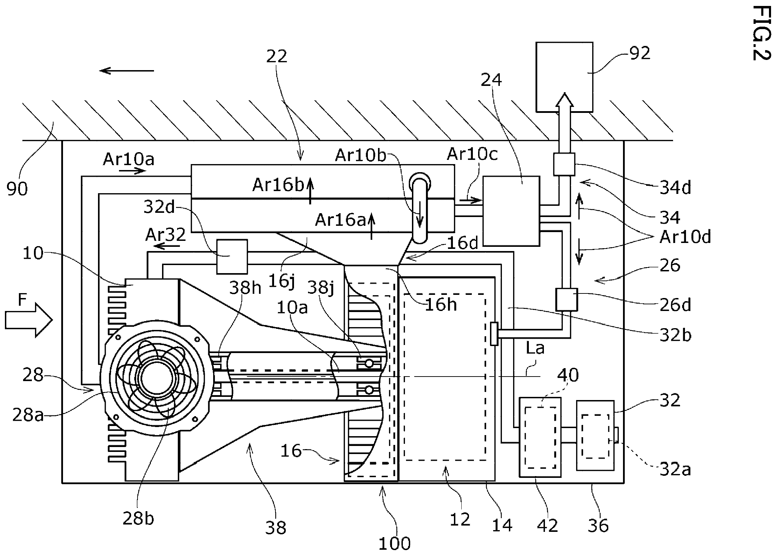

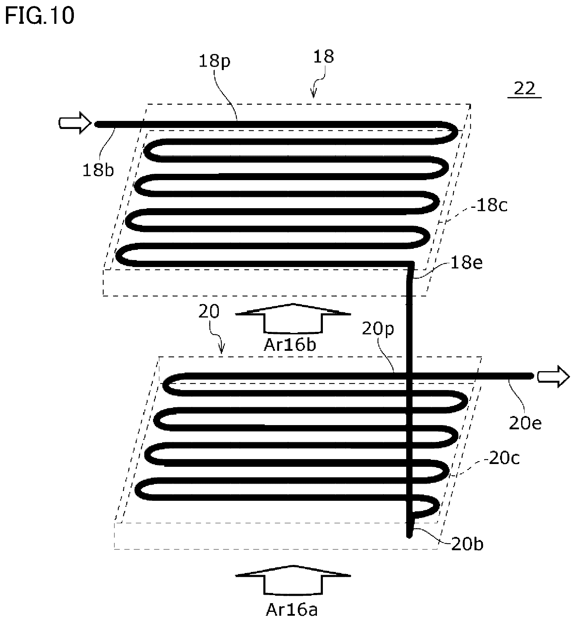

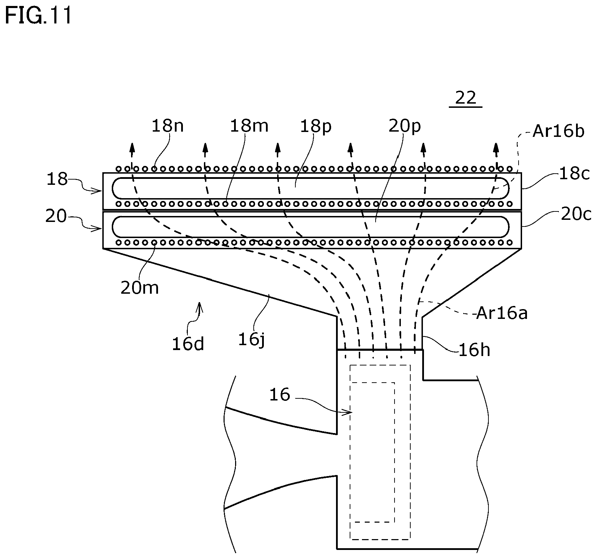

With reference to Figs. 1 to 11, a configuration of an air compression device 100 according to a first embodiment of the present invention will be described. As an example, the air compression device 100 is provided under a floor of a railway vehicle and can be used as an air compression device which supplies compressed air to the vehicle. Fig. 1 is a system diagram schematically illustrating a configuration of the air compression device 100. Fig. 2 is a schematic view illustrating a state in which the air compression device 100 is installed in the railway vehicle 90. In this drawing, for easy understanding, a part of a bearing holder 38 and a multiblade fan 16 is fractured, and a blower fan 28 is shown smaller than an actual ratio.

The air compression device 100 of the present embodiment includes a compressor 10, a compressor driving part 14, a multiblade fan 16, a cooler 22, a dehumidifier 24, an air introduction unit 26, a blower fan 28, an air suction part 32, a compressed air delivery part 34, an inverter control device 40, and a housing case 36. The air compression device 100 compresses the air sucked from the air suction part 32 with the compressor 10, cools the air with the cooler 22, dehumidifies the air with the dehumidifier 24, delivers the air out from the compressed air delivery part 34, and supplies the air to the vehicle 90.

Hereinafter, the direction along the central axis La of the rotary shaft 10a of the compressor 10 is referred to as "axial direction", and the circumferential direction and the radial direction of the circle centered on the central axis La are respectively "circumferential direction" and "radial direction". Hereinafter, for convenience, one side (a right side in the drawing) in the axial direction is referred to as an input side, and the other side (a left side in the drawing) is referred to as a non-input side. In this example, the motor 12 is provided on the input side of the compressor 10, and the compressor 10 is provided on the non-input side of the motor 12.

The air suction part 32 is installed in the housing case 36 and functions as a mechanism for sucking air (outside air) compressed by the compressor 10. The air suction part 32 is formed so as to communicate with the compressor 10 through the suction pipe 32b. The air suction part 32 is provided with a suction filter 32a that suppresses the passage of dust such as sand dust when the suction air passes. The suction filter 32a may be a filter using a mesh.

The compressed air delivery part 34 functions as a mechanism that delivers the compressed air Ar10d cooled by the cooler 22 described later and dehumidified by the dehumidifier 24. The compressed air delivery part 34 supplies the generated compressed air Ar10d to the compressed air reservoir 92 installed outside the housing case 36.

The compressed air delivery part 34 may include a valve mechanism 34d provided in a path that allows the dehumidifier 24 and the compressed air reservoir 92 to communicate with each other. The valve mechanism 34d may be a check valve that allows the compressed air Ar10d to pass toward the compressed air reservoir 92 side and prevent backflow from the compressed air reservoir 92 when the dehumidifier 24 side is equal to or higher than a predetermined pressure.

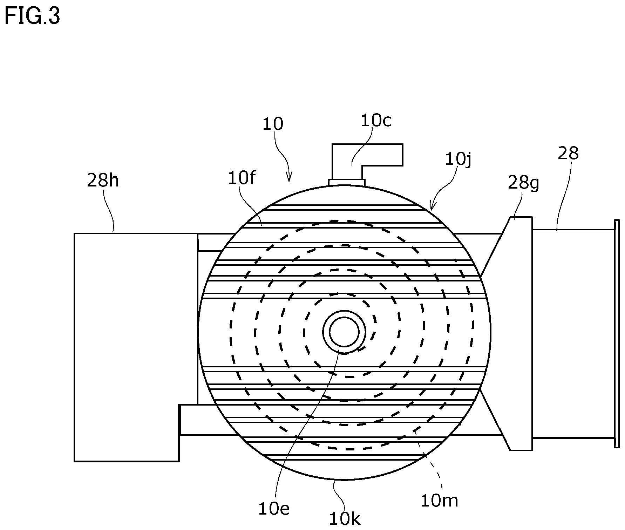

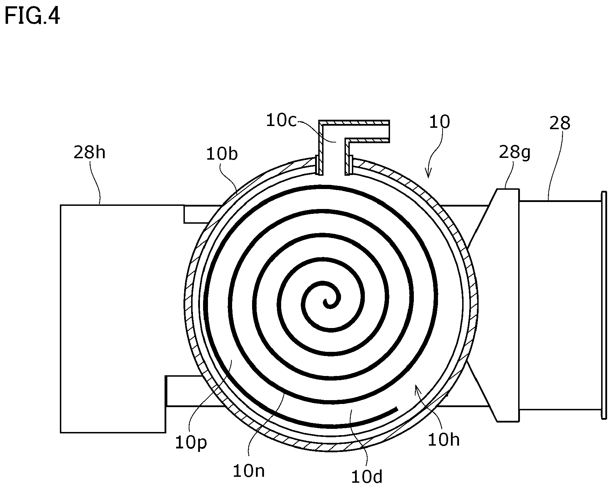

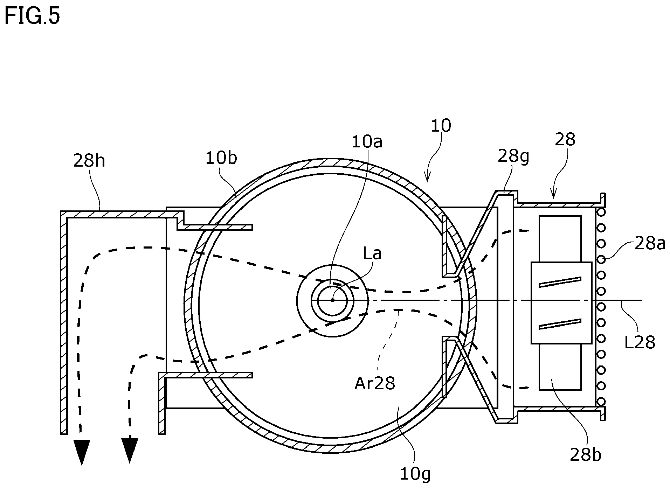

The compressor 10 will be described with reference to Figs. 2 and 3 to 5. These drawings illustrate the compressor 10 and the blower fan 28 as viewed from the arrow F in Fig. 2. Fig. 3 is a front view schematically illustrating the compressor 10 and the blower fan 28. Fig. 4 illustrates a state where a fixed scroll portion 10j is removed. Fig. 5 illustrates a back space 10g with an orbiting scroll portion 10h removed. The compressor 10 of the present embodiment is a scroll type air compressor which includes a rotary shaft 10a, a body portion 10b, a suction port 10c, a discharge port 10e, an air cooling fin 10f, an orbiting scroll portion 10h, a fixed scroll portion 10j, and a back space 10g.

In the compressor 10, the suction port 10c communicates with the air suction part 32, and compresses the air Ar32 sucked into the pump space 10d from the air suction part 32 through the suction pipe 32b. The valve mechanism 32d is provided between the air suction part 32 and the suction port 10c of the compressor 10. The valve mechanism 32d opens when the compressor 10 is operated and the compressor 10 side becomes negative pressure. The discharge port 10e communicates with the cooler 22, and the compressed air is discharged from the discharge port 10e to the cooler 22.

The body portion 10b is a circumferential outer peripheral wall that defines the pump space 10d. The body portion 10b surrounds a fixed scroll 10m and an orbiting scroll 10n in the pump space 10d. The fixed scroll portion 10j includes a fixed disc portion 10k provided with a plurality of air cooling fins 10f on the outside and a fixed scroll 10m fixed inside the fixed disc portion 10k. The discharge port 10e is provided at the center of the fixed disc portion 10k. The orbiting scroll portion 10h includes an orbiting disc portion 10p and an orbiting scroll 10n fixed to the orbiting disc portion 10p. The rotary shaft 10a extending to the input side is fixed at the center of the orbiting disc portion 10p. The back space 10g is provided on the input side of the orbiting disc portion 10p, that is, on the back side of the orbiting scroll portion 10h. Cooling air is introduced from the blower fan 28 into the back space 10g, and the orbiting disc portion 10p and the rotary shaft 10a are forcibly cooled by air. The blower fan 28 will be described later.

The orbiting scroll 10n and the fixed scroll 10m are spiral bodies having the same shape. The compressor 10 compresses air when the volume of the compression space is changed by orbiting the orbiting scroll 10n integrally with the rotary shaft 10a with respect to the fixed scroll 10m. The compressor 10 sucks air from the outer periphery and performs compression toward the center. The compressor 10 may be an oil-free type.

The blower fan 28 will be described with reference to Figs. 2 and 3 to 5. The blower fan 28 is a blower mechanism that delivers cooling air (hereinafter referred to as a cooling air Ar28) to the compressor 10. The blower fan 28 supplies the cooling air Ar28 to the back space 10g on the back side of the orbiting scroll portion 10h to mainly cool the orbiting scroll portion 10h.

The blower fan 28 of the present embodiment is an electric axial flow blower having a propeller 28b. As illustrated in Fig. 5, the blower fan 28 is arranged on the side of the compressor 10 so that the rotation axis L28 of the propeller 28b is orthogonal to the rotary shaft 10a of the compressor 10. An outside air filter 28a formed of a wire mesh or the like is provided on the upstream side of the blower fan 28. A blower duct 28g for guiding the cooling air Ar28 to the central portion of the orbiting scroll portion 10h is provided on the downstream side of the blower fan 28.

The blower duct 28g has a substantially quadrangular frustum shape of which the cross-sectional area decreases toward the compressor 10. The cooling air Ar28 is throttled along the inner surface of the blower duct 28g and cools the central portion of the orbiting scroll portion 10h intensively. Since the temperature of the central portion of the orbiting scroll portion 10h is the highest, the cooling effect can be enhanced by intensively cooling the center portion. An exhaust duct 28h is provided on the downstream side of the back space 10g. In this example, the upstream side of the exhaust duct 28h faces the blower duct 28g, and the downstream side is directed downward.

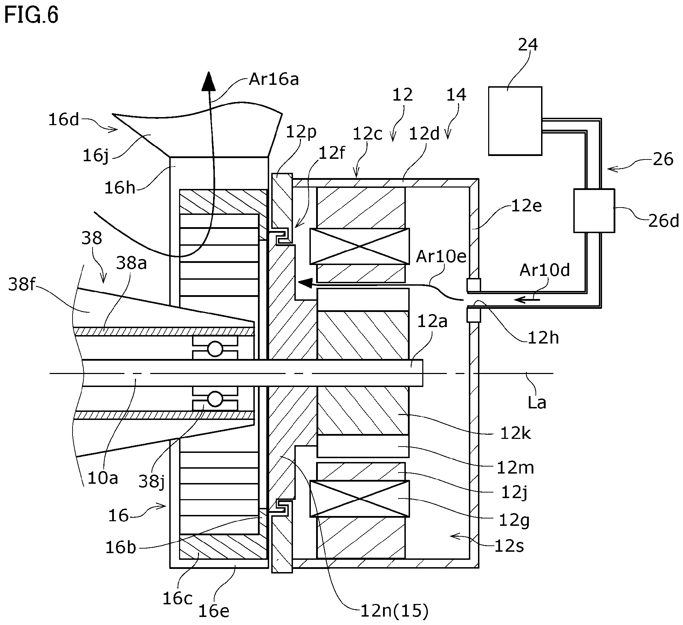

The bearing holder 38 will be described with reference to Figs. 2 and 6. Fig. 6 is a side sectional view schematically illustrating the periphery of the compressor driving part 14 and the multiblade fan 16. The bearing holder 38 is a portion that is provided on the input side of the compressor 10 and supports bearings 38h and 38j that rotatably supports the rotary shaft 10a. The bearing holder 38 has a hollow cylindrical portion 38a and a plurality of fins 38f extending radially outward from the cylindrical portion 38a. The fin 38f has a triangular shape of which radially outer end extends radially outward as it approaches the compressor 10 in the axial direction. In this example, four fins 38f are provided at 90° intervals in the circumferential direction on the outer periphery of the cylindrical portion 38a. The bearing holder 38 also has a function of radiating heat generated in the compressor 10 to suppress an excessive temperature rise of the bearings 38h and 38j.

The bearings 38h and 38j include a first bearing 38h arranged near the compressor 10 and a second bearing 38j arranged near the motor 12. The first and second bearings 38h and 38j rotatably support the rotary shaft 10a. The first and second bearings 38h and 38j are held in the hollow portion of the cylindrical portion 38a while being separated in the axial direction.

A part of the bearing holder 38 enters the inner peripheral portion of the multiblade fan 16 in the axial direction. Further, at least a part of the bearing 38j that supports the rotary shaft 10a of the compressor 10 overlaps the multiblade fan 16 in the axial direction. In this case, the axial space can be used more effectively than the case of no overlap.

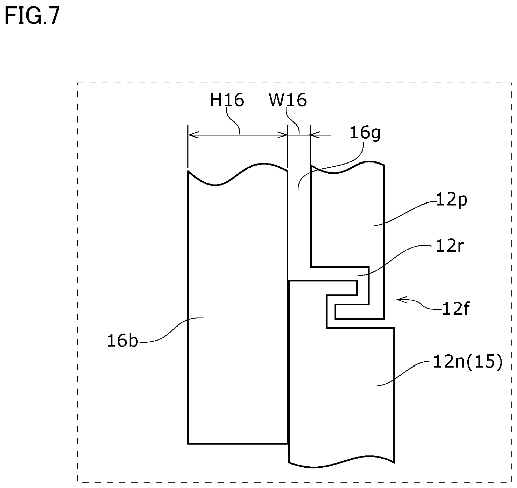

The compressor driving part 14 will be described with reference to Figs. 2, 6, and 7. Fig. 7 is an enlarged side sectional view illustrating the periphery of the labyrinth portion 12f of the compressor driving part 14. The compressor driving part 14 mainly includes a motor 12 that rotationally drives the compressor 10 and a balance weight 15.

The motor 12 will be described. The motor 12 includes an output shaft 12a, a rotor 12k, a stator 12s, a casing 12c, and a labyrinth portion 12f. In the present embodiment, the output shaft 12a of the motor 12 is provided integrally with the rotary shaft 10a of the compressor 10. The rotor 12k includes a magnet 12m having a plurality of magnetic poles in the circumferential direction and is fixed to the outer periphery of the output shaft 12a.

The stator 12s includes a stator core 12j that surrounds the rotor 12k via a magnetic gap and a coil 12g that is wound around the stator core 12j. The outer periphery of the stator 12s is fixed to the inner peripheral surface of the casing 12c. The casing 12c includes a cylindrical portion 12d and a bottom portion 12e, and functions as an outer shell that surrounds the rotor 12k and the stator 12s. In this example, the casing 12c has a bottomed cylindrical shape in which the non-input side is opened and the bottom portion 12e is provided on the input side. The bottom portion 12e is provided with an introduction port 12h for taking in air from the air introduction unit 26.

The labyrinth portion 12f is a member that closes the non-input side of the cylindrical portion 12d, and has a disc shape in this example. The labyrinth portion 12f includes a rotating body portion 12n fixed to the output shaft 12a and a stationary body portion 12p fixed to the cylindrical portion 12d. In this example, the rotating body portion 12n has a disc shape, and the stationary body portion 12p has a donut shape. The rotating body portion 12n also serves as the balance weight 15 described later. A labyrinth 12r is provided between the rotating body portion 12n and the stationary body portion 12p. In this example, the labyrinth 12r is a maze that combines bended spaces. The labyrinth portion 12f includes the labyrinth 12r to reduce the intrusion of dust into the motor 12.

Further, since the compressed air Ar10e introduced from the introduction port 12h flows outward from the labyrinth 12r, the dust in the labyrinth 12r is easily discharged outside by this air flow.

The motor 12 generates a field magnetic field in the magnetic gap when a drive current is provided to the coil 12g of the stator 12s from an inverter control device 40 (drive circuit). The motor 12 generates a rotational driving force on the rotor 12k and the output shaft 12a due to the field magnetic field and the magnet 12m of the rotor 12k. The rotational driving force of the output shaft 12a drives the compressor 10 through the rotary shaft 10a. The bearing that supports the rotary shaft 10a is provided in the bearing holder 38 outside the compressor driving part 14, and is not provided in the compressor driving part 14.

The inverter control device 40 will be described with reference to Figs. 1 and 2. The inverter control device 40 functions as an inverter power supply device for driving and controlling the motor 12. The inverter control device 40 is protected from dust or rainwater by being stored in the storage box 42. The storage box 42 may be made of metal. The inverter control device 40 includes electronic components (all not illustrated) such as a switching power module and a smoothing capacitor for supplying a drive current to the coil 12g.

Since these electronic components self-heat during operation, the inner temperature of the storage box 42 increases. When the inner temperature of the box becomes high, the lifetime of these electronic components is shortened, and may cause failure. In the present embodiment, the storage box 42 is provided on the path of the suction air Ar32 between the air suction part 32 and the suction port 10c of the compressor 10. In this example, the storage box 42 is provided between the air suction part 32 and the valve mechanism 32d. That is, part or all of the suction air Ar32 passes through the storage box 42 and is delivered to the compressor 10 side. As the suction air Ar32 passes through the storage box 42, the inside of the box is forcibly ventilated, and the electronic components of the inverter control device 40 are air-cooled. In this case, the rise of the inner temperature of the storage box 42 is suppressed, and the lifetime of the electronic component is extended.

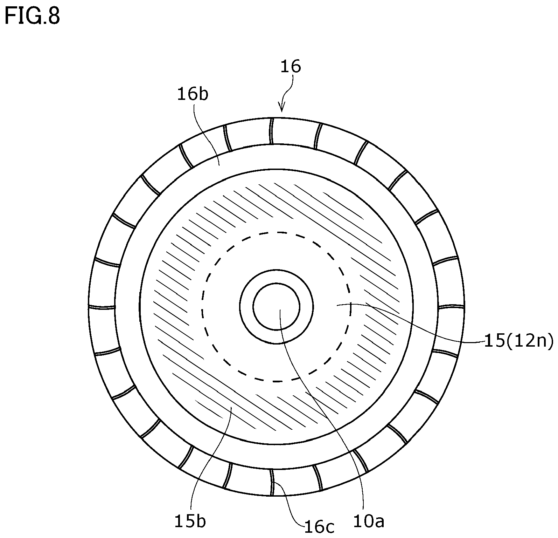

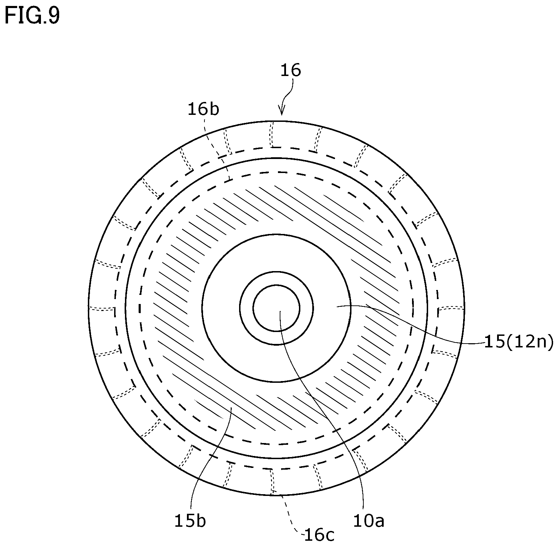

The balance weight 15 will be described with reference to Figs. 8 and 9. Fig. 8 is a front view illustrating the periphery of the balance weight 15. Fig. 9 is a rear view illustrating the periphery of the balance weight 15. In order to suppress rotational vibration, it is conceivable that the multiblade fan 16 and the rotor 12k are subjected to processing (hereinafter referred to as "balance adjustment") that individually reduces the unbalance amount of the rotational balance (dynamic balance). This case is disadvantageous in that the total amount of residual unbalance may increase due to the accumulation of the residual unbalance amount of each member after balance adjustment, and the processing man-hours increase. For this reason, the present embodiment includes a balance weight 15 having a balance adjusting unit 15b. The balance weight 15 in this example is a metal disc-like member, also serves as the rotating body portion 12n of the labyrinth portion 12f as described above, and is fixed to the input side of the disc portion 16b of the multiblade fan 16.

The multiblade fan 16, the rotor 12k, the rotary shaft 10a, and the balance weight 15 are integrally configured, and in this state, the balance adjustment of reducing the total unbalance is performed on the balance weight 15. In the balance adjustment process, the multiblade fan 16, the rotor 12k, the rotary shaft 10a, and the balance weight 15 are integrated to form a workpiece. The workpiece is rotated by a balance inspection device to identify the amount and position of the unbalance. The mass is added to or deleted from the balance adjusting unit 15b of the balance weight 15 according to the specified result of the inspection device. The addition or deletion of the mass may be performed on the balance adjusting unit 15b on one or both sides of the balance weight 15. As illustrated in Figs. 8 and 9, the balance adjusting unit 15b is a flat donut-shaped portion in the radial intermediate area of the balance weight 15.

The multiblade fan 16 will be described with reference to Figs. 6 and 7. The multiblade fan 16 functions as a blower that collects and sends the air flow generated from the central portion toward the outer periphery in a delivery duct 16d. The multiblade fan 16 may be referred to as a sirocco fan. The multiblade fan 16 includes a disc portion 16b, a plurality of blades 16c, a casing 16e, and a delivery duct 16d.

The disc portion 16b is a hollow disc-shaped member of which the center is fixed to the rotary shaft 10a. The plurality of blades 16c extend from the disc portion 16b to the non-input side in the vicinity of the outer periphery of the disc portion 16b. The plurality of blades 16c are arranged at predetermined angles in the circumferential direction. The casing 16e is a cylindrical member that surrounds the disc portion 16b and the plurality of blades 16c.

As illustrated in Fig. 7, the disc portion 16b is arranged on the non-input side of the motor 12 with an axial gap 16g interposed therebetween. The width W16 of the axial gap 16g may be narrower than the thickness H16 of the disc portion 16b. In the axial direction, the blade 16c overlaps a second bearing 13e in the axial direction.

The delivery duct 16d is a cylindrical member extending from the casing 16e to the cooler 22. A lower portion 16h of the delivery duct 16d is a substantially rectangular tube-shaped portion extending upward from the upper portion of the casing 16e. An upper portion 16j of the delivery duct 16d is a portion that communicates with the lower portion of the cooler 22 from the upper portion of the lower portion 16h. The upper portion 16j has a substantially quadrangular truncated pyramid shape with a wide upper side.

The multiblade fan 16 may overlap with at least a part of a bearing 38j that supports the rotary shaft 10a of the compressor 10 in the axial direction. In this case, the axial length of the air compression device 100 can be shortened compared to the case where the multiblade fan 16 does not overlap the bearing 38j.

The cooler 22 will be described with reference to Figs. 2, 6, 10, and 11. The cooler 22 cools the compressed air supplied from the compressor 10 at a high temperature (for example, 200°C to 250°C) to a temperature slightly higher than the room temperature (for example, 40°C to 50°C) and supplies the compressed air to the dehumidifier 24. The cooler 22 may be configured as a single cooler. However, in the present embodiment, a plurality of coolers are connected in series. The cooler 22 of the present embodiment includes a first cooler 18 that primarily cools the compressed air from the compressor 10 and a second cooler 20 that secondarily cools the compressed air cooled by the first cooler 18.

The first cooler 18 and the second cooler 20 have bent pipes 18p and 20p and pipe housing parts 18c and 20c for housing the pipes, respectively. The bent pipes 18p and 20p meander so that they have a plurality of bent portions, and compressed air flows from one end of the pipe toward the other end. The pipe housing parts 18c and 20c have vertically thin rectangular tube-shaped outer walls, and function as a wind tunnel for allowing a cooling air to flow vertically.

Wire mesh portions 18m and 20m for supporting the bent pipes 18p and 20p are fixed to the lower portions of the pipe housing parts 18c and 20c. The upper surface of the pipe housing part 20c is opened, and the wire mesh portion 20n is fixed to the upper surface of the pipe housing part 18c. As described above, the pipe housing parts 18c and 20c have a configuration in which the air flow easily passes vertically.

The first introduction part 18b provided at one end of the bent pipe 18p protrudes outside from the side wall of the pipe housing part 18c of the first cooler 18. The first introduction part 18b communicates with the discharge port 10e of the compressor 10. A first lead-out part 18e provided at the other end of the bent pipe 18p protrudes outside from the side wall of the pipe housing part 18c of the first cooler 18. The first lead-out part 18e communicates with a second introduction part 20b.

The second introduction part 20b provided at one end of the bent pipe 20p protrudes outside from the bottom of the pipe housing part 20c of the second cooler 20. The second introduction part 20b communicates with the first lead-out part 18e. A second lead-out part 20e provided at the other end of the bent pipe 20p protrudes outside from the side wall of the pipe housing part 20c of the second cooler 20. The second lead-out part 20e communicates with the dehumidifier 24.

The pipe housing part 18c is arranged on the upper side of the pipe housing part 20c. The air flow Ar16a delivered from the multiblade fan 16 is supplied to the lower surface of the pipe housing part 20c through the duct 16d. The air flow Ar16a flows through the gap of the wire mesh portion 20m and the gap of the bent pipe 20p, and is discharged from the upper surface of the pipe housing part 20c. As the air flow Ar16a passes through the outer peripheral surface of the bent pipe 20p, the compressed air of the bent pipe 20p is cooled.

The air flow Ar16b discharged from the pipe housing part 20c is supplied to the lower surface of the pipe housing part 18c. The air flow Ar16b flows through the gap of the wire mesh portion 18m, the gap of the bent pipe 18p, and the gap of the wire mesh portion 20n, and is discharged from the upper surface of the pipe housing part 18c. The compressed air Ar20c of the bent pipe 18p is cooled by the air flow Ar16b passing through the outer peripheral surface of the bent pipe 18p. The air discharged from the pipe housing part 18c is diffused into the atmosphere.

As described above, the air flow Ar16a delivered from the multiblade fan 16 is supplied to the second cooler 20 first and is used for secondary cooling of the compressed air after the primary cooling. The air flow Ar16b discharged from the second cooler 20 is supplied to the first cooler 18 and is used for primary cooling of the compressed air. Compared to the case where the air flow Ar16a is used for the primary cooling first, the temperature difference between the compressed air and the cooling air in the secondary cooling becomes large, so that the cooling efficiency can be increased.

The cooler 22 may be arranged anywhere as long as a desired cooling effect is obtained. The cooler 22 of the present embodiment is arranged above the center of the air compression device 100 in the vertical direction. In particular, the cooler 22 is arranged between the multiblade fan 16 and the floor of the railway vehicle 90. By shortening the path of the air flow Ar16a delivered from the multiblade fan 16, an extra piping space can be saved. Further, the longitudinal length of the air compression device 100 can be shortened compared to the case of being arranged in the longitudinal direction of the multiblade fan 16.

The dehumidifier 24 is provided in a path that allows the cooler 22 and the compressed air delivery part 34 to communicate with each other. The dehumidifier is a hollow fiber membrane type dehumidifier that dehumidifies the cooled compressed air Ar10c. The dehumidifier 24 may include a filter element that includes a desiccant. In the dehumidifier 24, final dehumidification is performed on the compressed air Ar10d delivered from the compressed air delivery part 34. The compressed air Ar10d is delivered to the compressed air reservoir 92 via the compressed air delivery part 34.

The air introduction unit 26 introduces the compressed air Ar10d dehumidified by the dehumidifier 24 into the casing 12c of the motor 12. When the compressed air Ar10d is introduced to make the pressure inside the casing 12c a positive pressure higher than the external pressure, it is possible to reduce the intrusion of dust. The air introduction unit 26 delivers the compressed air Ar10d to the introduction port 12h provided in the bottom portion 12e. The air introduction unit 26 is provided with a valve mechanism 26d on a path for guiding the compressed air Ar10d from the dehumidifier 24 to the casing 12c. The valve mechanism 26d may be a check valve that allows the compressed air Ar10d to pass to the casing 12c side and block backflow from the casing 12c to the dehumidifier 24 when the dehumidifier 24 side is equal to or higher than a predetermined pressure.

The housing case 36 houses the compressor 10, the compressor driving part 14, the multiblade fan 16, the cooler 22, the dehumidifier 24, the air introduction unit 26, the blower fan 28, the air suction part 32, the compressed air delivery part 34, and the storage box 42 of the inverter control device 40.

The outline of one aspect of the present invention is as follows. The air compression device 100 according to one aspect of the present invention includes the compressor 10 that generates compressed air, the motor 12 that drives the compressor 10, and the air introduction unit 26 that introduces compressed air into the motor 12 to increase the internal pressure.

According to this aspect, the pressure inside the motor 12 can be increased to reduce the intrusion of dust inside the motor.

In the air compression device 100, the air introduction unit 26 may be structured to make the inside of the motor 12 to have a positive pressure. In this case, the air flow from the inside of the motor 12 toward the outside can be formed to urge discharge of dust toward the outside.

In the air compression device 100, the motor 12 includes the rotating body portion 12n and the stationary body portion 12p. The labyrinth 12r is provided between the rotating body portion 12n and the stationary body portion 12p, and an introduction port for compressed air may be provided on the opposite side of the labyrinth 12r with the rotating body portion 12n interposed therebetween. In this case, the air flow from the labyrinth 12r toward the outside is easily formed, and the dust attached to the labyrinth 12r can be discharged from the labyrinth 12r.

The air compression device 100 may further include the multiblade fan 16 that rotates integrally with the motor 12 to generate an air flow and the cooler 22 that cools the compressed air by the air flow. The air introduction unit 26 may be structured to introduce the compressed air cooled by the cooler 22 into the motor 12. The air compression device 100 may be provided under the floor of the railway vehicle. In this case, since the multiblade fan 16 can be rotated by the rotation of the motor 12, it is not necessary to provide another motor for generating an air flow. Further, the temperature rise of the motor 12 can be suppressed as compared with the configuration in which the compressed air before cooling is introduced.

A second embodiment of the present invention is a dust prevention method for a motor. The dust prevention method includes generating compressed air by the driving force of the motor 12 and introducing the compressed air into the motor 12 to increase the internal pressure. According to this aspect, the pressure inside the motor 12 can be increased to reduce the intrusion of dust into the inside.

The dust prevention method described above may further include discharging the air inside the motor 12 from the gap between the rotating body portion 12n and the stationary body portion 12p of the motor 12. In this case, it is possible to urge the discharge of dust to the outside by forming an air flow from the inside of the motor 12 to the outside through the gap.

In the dust prevention method described above, the gap between the rotating body portion 12n and the stationary body portion 12p may be the labyrinth 12r formed between the rotating body portion 12n and the stationary body portion 12p. In this case, the dust on the labyrinth 12r can be discharged from the labyrinth 12r.

The dust prevention method described above further includes generating an air flow by the multiblade fan 16 that rotates integrally with the motor 12 and cooling the compressed air by the air flow. The increasing of pressure may include introducing the cooled compressed air into the motor 12. In this case, since the multiblade fan 16 can be rotated by the rotation of the motor 12, it is not necessary to provide another motor for generating an air flow. Further, the temperature rise of the motor 12 can be suppressed as compared with the configuration in which the compressed air before cooling is introduced.

A third embodiment of the present invention is an air compression device. The air compression device 100 includes the motor 12 that drives the compressor 10 that generates compressed air, and the inside of the motor 12 is set to a positive pressure. In order to make the inside of the motor 12 have a positive pressure, the compressed air generated by the compressor 10 may be introduced into the casing 12c of the motor 12 by the air introduction unit 26, or the air delivered from another air generation device may be introduced into the casing 12c.

According to this configuration, the inside of the casing 12c of the motor 12 can be set to a positive pressure to reduce dust intrusion.

The example of embodiment of this invention have been described in detail. Each of the above-described embodiments is merely a specific example for carrying out the present invention. The contents of the embodiments do not limit the technical scope of the present invention, and many design changes such as changes, additions, and deletions of constituent elements are possible without departing from the spirit of the invention defined in the claims. In the above-described embodiments, the contents that allow such a design change have been described with the notation of "of embodiment", "in the embodiment", or the like. However, design changes are not unacceptable for content without such notation.

Hereinafter, modifications will be described. In the drawings and descriptions of the modifications, the same reference numerals are given to the same or equivalent components and members as those in the embodiment. The description overlapping with the embodiment will be omitted as appropriate, and the configuration different from the first embodiment will be mainly described.

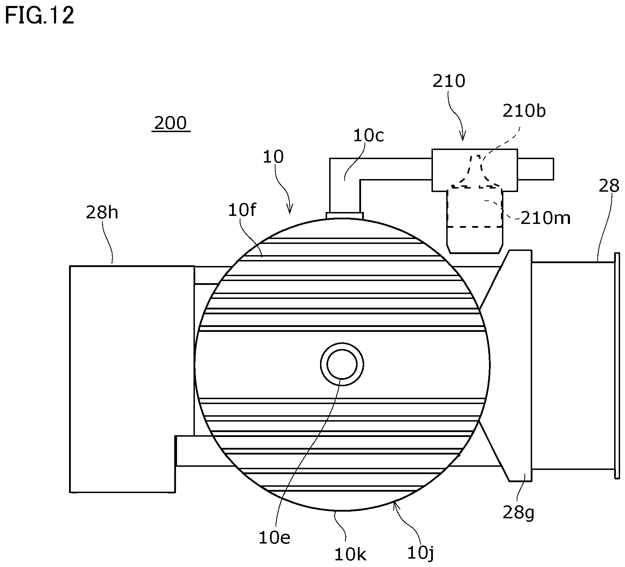

With reference to Fig. 12, an air compression device 200 according to a first modification will be described. This modification is different from the embodiment in that a supercharger 210 is provided at the suction port of the compressor 10 and is the same in the other configuration. Thus, the supercharger 210 will be described mainly. Fig. 12 is a front view illustrating the periphery of the compressor 10 and corresponds to Fig. 3.

In the scroll compressor, since the outer periphery has a negative pressure, it is easy to suck dust due to a pressure difference between the outside and the inside. In order to reduce the intrusion of dust, the compressor 10 is provided with a face seal (not illustrated) that seals the outer peripheral surface. However, the face seal has a gap called a joint portion, and dust enters through this gap. For this reason, in this modification, the supercharger 210 is provided at the suction port 10c of the compressor 10.

The supercharger 210 is not particularly limited as long as the supercharger can increase the internal pressure of the compressor 10. The supercharger 210 of this modification has an impeller 210b that is rotated by a motor 210m. The supercharger 210 pressurizes the upstream air, makes the downstream air equal to or higher than the atmospheric pressure, and supplies the air to the suction port 10c of the compressor 10. The supercharger 210 is provided in the path between the valve mechanism 32d and the suction port 10c. By providing the supercharger 210, it is possible to increase the internal pressure in the vicinity of the suction port 10c of the compressor 10, that is, the outer periphery of the compressor 10, and to suppress the intrusion of dust due to negative pressure.

In the description of the embodiment, an example is described in which the output shaft 12a of the motor 12 is integrated with the rotary shaft 10a of the compressor 10, but the invention is not limited to this. For example, the output shaft of the motor may be separated from the rotary shaft of the compressor and connected by a coupling or the like.

In the description of the embodiment, an example is described in which the valve mechanism 26d is a check valve, but the invention is not limited to this. For example, the valve mechanism 26d may be a secondary pressure adjusting valve (pressure reducing valve) capable of adjusting the pressure on the secondary side.

In the description of the embodiment, an example is described in which the motor 12 is a surface magnet type DC brushless motor, but the invention is not limited to this. The motor may be any motor as long as the motor can drive the compressor. For example, the motor may be another type of motor such as a magnet-embedded motor, an AC motor, a brushed motor, or a geared motor.

In the description of the embodiment, the motor 12 is described which does not include a bearing and in which the stator and the rotor are built in the compressor. However, the invention is not limited to this. For example, the motor may be a non-built-in structure in which a bearing, a rotor, and a stator are integrated in a motor case.

In the description of the embodiment, an example is described in which the rotating body portion 12n of the labyrinth portion 12f also serves as the balance weight 15. However, the invention is not limited to this. The rotating body portion of the labyrinth portion may be provided separately from the balance weight.

In the description of the embodiment, an example is described in which the compressor 10 is a scroll type, but the invention is not limited to this. The compressor may be any compressor as long as the compressor can generate compressed air. For example, the compressor may be another type of air compressor such as a screw type or a reciprocating type.

The above-described modification has the same operations and effects as those of the first embodiment.

Any combination of the above-described embodiments and modifications is also useful as an embodiment of the present invention. The new embodiment made by the combination has the effects of the combined embodiment and modifications.

## Claims

1. An air compression device comprising:
a compressor that generates compressed air;
a motor that drives the compressor; and
an air introduction unit that introduces the compressed air into the motor and increases an internal pressure.

2. The air compression device according to claim 1, wherein
the air introduction unit makes an inside of the motor to have a positive pressure.

3. The air compression device according to claim 1 or 2, wherein
the motor has a rotating body portion and a stationary body portion,
a labyrinth is provided between the rotating body portion and the stationary body portion, and
an introduction port of the compressed air is provided on a side opposite to the labyrinth with the rotating body portion interposed between the introduction port and the labyrinth.

4. The air compression device according to any one of claims 1 to 3, further comprising:
a multiblade fan that rotates integrally with the motor to generate an air flow; and
a cooler that cools the compressed air by the air flow, wherein
the air introduction unit is configured to introduce the compressed air cooled by the cooler into the motor, and
the air compression device is provided under a floor of a railway vehicle.

5. A dust prevention method for a motor comprising:
generating compressed air by a driving force of a motor; and
introducing the compressed air into the motor to increase an internal pressure.

6. The dust prevention method for the motor according to claim 5, further comprising:
discharging air inside the motor from a gap between a rotating body portion and a stationary body portion of the motor.

7. The dust prevention method for the motor according to claim 5 or 6, further comprising:
generating an air flow by a multiblade fan that rotates integrally with the motor; and
cooling the compressed air by the air flow, wherein
increasing the pressure includes introducing the cooled compressed air into the motor.
